(19) Europäisches Patentamt
European Patent Office
Office européen des brevets

(11) **EP 3 712 417 A1**

(12) **EUROPEAN PATENT APPLICATION**
published in accordance with Art. 153(4) EPC

(43) Date of publication:
**23.09.2020 Bulletin 2020/39**

(51) Int Cl.:
*F02D 41/22* $^{(2006.01)}$     *F02D 45/00* $^{(2006.01)}$

(21) Application number: **17932324.1**

(86) International application number:
**PCT/JP2017/041294**

(22) Date of filing: **16.11.2017**

(87) International publication number:
**WO 2019/097634 (23.05.2019 Gazette 2019/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **Japan Engine Corporation**
  **Futami-cho**
  **Akashi-shi**
  **Hyogo 674-0093 (JP)**
• **Nippon Yusen Kabushiki Kaisha**
  **Tokyo 100-0005 (JP)**

(72) Inventors:
• **HIRABAYASHI, Hiroaki**
  **Akashi-shi**
  **Hyogo 674-0093 (JP)**

• **EDO, Koji**
  **Akashi-shi**
  **Hyogo 674-0093 (JP)**
• **YAMADA, Shogo**
  **Tokyo 100-0005 (JP)**
• **HORIKIRI, Rokuro**
  **Tokyo 100-0005 (JP)**
• **NAKATANI, Hiroshi**
  **Tokyo 100-0005 (JP)**
• **HASHIMOTO, Ayako**
  **Tokyo 100-0005 (JP)**

(74) Representative: **Hoffmann Eitle**
**Patent- und Rechtsanwälte PartmbB**
**Arabellastraße 30**
**81925 München (DE)**

(54) **METHOD OF EVALUATING FATIGUE LEVEL OF CONSTITUENT COMPONENT OF MARINE DIESEL ENGINE, FATIGUE LEVEL EVALUATION DEVICE, REMAINING LIFETIME DIAGNOSING METHOD, REMAINING LIFETIME DIAGNOSING DEVICE, AND SYSTEM**

(57) Provided is a method that evaluates a fatigue level of a component of a marine diesel engine. The fatigue level evaluation method generates at least two evaluation points among an operation load evaluation point relating to an operation load of the marine diesel engine, an operation load variation evaluation point relating to variation of the operation load of the marine diesel engine, an operation cycle evaluation point relating to an operation cycle of the marine diesel engine, a fuel property evaluation point relating to a property of fuel of the marine diesel engine, a combustibility evaluation point relating to combustibility of the fuel, and an exhaust gas temperature evaluation point relating to temperature of exhaust gas of the marine diesel engine, for the component; calculates a total evaluation point of the fatigue level of the component by adding at least two of the generated evaluation points; and evaluates the fatigue level of the component based on the total evaluation point.

EP 3 712 417 A1

# FIG.1

100

3

3b

1

1a

1b

2

EVALUATION AND
DIAGNOSIS DEVICE

| ENGINE CONTROL UNIT |
|---|

| EVALUATION AND DIAGNOSIS UNIT |
|---|

INPUT UNIT

DISPLAY UNIT

3a

3c

**Description**

Field

The present invention relates to a method of evaluating fatigue level of a component of a marine diesel engine, a fatigue level evaluation device, a remaining lifetime diagnosing method, a remaining lifetime diagnosing device, and a system.

Background

Conventionally, to maintain the parts that constitute a marine diesel engine (hereinafter, may simply referred to as an engine), recommended maintenance intervals and maintenance time on the basis of the operation time of the engine have been specified in writing in an instruction manual and the like (Patent Literature 1).

Citation List

Patent Literature

Patent Literature 1: Japanese Patent No. 5550969 Summary

Technical Problem

However, conventionally, the maintenance time stated in the writing is not defined according to the actual usage, such as the operation status of the engine and the property of the fuel to be used. In reality, for example, when the ratio of the operation time at a low load relative to the operation time of the engine is higher than the ratio estimated when the maintenance time stated in writing is determined and the like, the deterioration of the parts such as abrasion and wear is smaller than the estimation. The deterioration different from what has been estimated such as the above is particularly generated in the combustion chamber of the engine or the nearby components. Consequently, when inspection or replacement is carried out at the maintenance time specified in writing, even though the target component can still be used, the inspection is carried out or the parts are replaced, by stopping the engine, disassembling the engine, and the like. As a result, unnecessary labor time, labor expenses, and replacing expenses of the parts are generated, and the operation efficiency of the engine is reduced.
The present invention has been made in view of the above, and an object of the present invention is to provide a fatigue level evaluation method for a component of a marine diesel engine, a fatigue level evaluation device, a remaining lifetime diagnosis method, a remaining lifetime diagnosis device, and a system that can more appropriately present inspection and replacement times for a component of a marine diesel engine.

Solution to Problem

To solve the problem and achieve the object, a method of evaluating a fatigue level of a component of a marine diesel engine according to the present invention includes: generating, for the component, at least two evaluation points selected from: an operation load evaluation point relating to an operation load of the marine diesel engine; an operation load variation evaluation point relating to variation of the operation load of the marine diesel engine; an operation cycle evaluation point relating to an operation cycle of the marine diesel engine; a fuel property evaluation point relating to a property of fuel of the marine diesel engine; a combustibility evaluation point relating to combustibility of the fuel; and an exhaust gas temperature evaluation point relating to temperature of exhaust gas of the marine diesel engine; calculating a total evaluation point of the fatigue level of the component by adding at least two of the generated evaluation points; and evaluating the fatigue level of the component based on the total evaluation point.
Moreover, in the method of evaluating the fatigue level of the component of the marine diesel engine according to the present invention, the operation load evaluation point includes a product of an average load factor of the marine diesel engine and a fatigue level influence coefficient relating to the operation load set for each component.
Moreover, in the method of evaluating the fatigue level of the component of the marine diesel engine according to the present invention, the operation load variation evaluation point includes: a product of an accumulated number of starts and stops of the marine diesel engine and a fatigue level influence coefficient relating to the accumulated number of starts and stops set for each component; and a product of an accumulated number of reciprocating operations that is an accumulated value of number of reciprocating operations between a low load region and a high load region of the marine diesel engine set for each component and a fatigue level influence coefficient relating to the accumulated number of reciprocating operations set for each component.

Moreover, in the method of evaluating the fatigue level of the component of the marine diesel engine according to the present invention, the operation cycle evaluation point includes: a product of an accumulated number of operation cycles of the marine diesel engine and a fatigue level influence coefficient relating to the accumulated number of operation cycles set for each component; and a product of an accumulated number of operation cycles with load that is an accumulated number of operation cycles of the marine diesel engine at equal to or more than a load factor set for each component and a fatigue level influence coefficient relating to the accumulated number of operation cycles with load set for each component.

Moreover, in the method of evaluating the fatigue level of the component of the marine diesel engine according to the present invention, the fuel property evaluation point includes a product of concentration of an ingredient contained in the fuel and a fatigue level influence coefficient relating to the concentration of the ingredient set for each component.

Moreover, in the method of evaluating the fatigue level of the component of the marine diesel engine according to the present invention, the ingredient is one or more selected from a group consisting of: sulfur; vanadium; sodium; aluminum and silicon; and sediment.

Moreover, in the method of evaluating the fatigue level of the component of the marine diesel engine according to the present invention, the fuel property evaluation point includes a product of a ratio of concentration of two ingredients contained in the fuel and a fatigue level influence coefficient relating to the ratio of concentration set for each component.

Moreover, in the method of evaluating the fatigue level of the component of the marine diesel engine according to the present invention, the ratio is a ratio of concentration of sodium with respect to concentration of vanadium.

Moreover, in the method of evaluating the fatigue level of the component of the marine diesel engine according to the present invention, the combustibility evaluation point includes a product of a value of CCAI that is a calculated carbon aromaticity index of the fuel and a fatigue level influence coefficient relating to combustibility set for each component.

Moreover, in the method of evaluating the fatigue level of the component of the marine diesel engine according to the present invention, the exhaust gas temperature evaluation point includes a product of temperature of the exhaust gas being measured and a fatigue level influence coefficient relating to the temperature of the exhaust gas set for each component.

Moreover, a method of diagnosing a remaining lifetime of a component of a marine diesel engine according to the present invention includes: diagnosing a remaining lifetime of the component, based on a fatigue level of the component evaluated by the method of evaluating the fatigue level according to the present invention.

Moreover, a fatigue level evaluation device for a component of a marine diesel engine according to the present invention is the fatigue level evaluation device being configured to evaluate a fatigue level of the component of the marine diesel engine, and includes: a calculation unit configured to calculate, for the component, a total evaluation point of the fatigue level of the component by adding at least two evaluation points selected from: an operation load evaluation point relating to an operation load of the marine diesel engine; an operation load variation evaluation point relating to variation of the operation load of the marine diesel engine; an operation cycle evaluation point relating to an operation cycle of the marine diesel engine; a fuel property evaluation point relating to a property of fuel of the marine diesel engine; a combustibility evaluation point relating to combustibility of the fuel; and an exhaust gas temperature evaluation point relating to temperature of exhaust gas of the marine diesel engine; and an evaluation unit configured to evaluate a fatigue level of the component based on the total evaluation point.

Moreover, a remaining lifetime diagnosis device for a component of a marine diesel engine according to the present invention is the remaining lifetime diagnosis device being configured to diagnose a remaining lifetime of the component of the marine diesel engine, and including: a calculation unit configured to calculate, for the component, a total evaluation point of a fatigue level of the component by adding at least two evaluation points selected from: an operation load evaluation point relating to an operation load of the marine diesel engine; an operation load variation evaluation point relating to variation of the operation load of the marine diesel engine; an operation cycle evaluation point relating to an operation cycle of the marine diesel engine; a fuel property evaluation point relating to a property of fuel of the marine diesel engine; a combustibility evaluation point relating to combustibility of the fuel; and an exhaust gas temperature evaluation point relating to temperature of exhaust gas of the marine diesel engine; an evaluation unit configured to evaluate a fatigue level of the component based on the total evaluation point; and a diagnosis unit configured to diagnose the remaining lifetime of the component based on the fatigue level.

Moreover, a system according to the present invention includes: the marine diesel engine; and the fatigue level evaluation device according to the present invention or the remaining lifetime diagnosis device according to the present invention.

Advantageous Effects of Invention

With the present invention, it is possible to more appropriately present inspection and replacement times for a component of a marine diesel engine.

Brief Description of Drawings

FIG. 1 is a schematic diagram illustrating a configuration of a system according to an embodiment.
FIG. 2 is a schematic diagram illustrating a configuration near a combustion chamber of an engine.
FIG. 3 is a diagram illustrating an example of a relation between a load factor of the engine and a ratio of operation time of the engine at the load factor.
FIG. 4A is a diagram for explaining the accumulated number of starts and stops of the engine.
FIG. 4B is a diagram for explaining the accumulated number of starts and stops of the engine.
FIG. 5A is a diagram for explaining the accumulated number of reciprocating operations of the engine.
FIG. 5B is a diagram for explaining the accumulated number of reciprocating operations of the engine.
FIG. 6A is a diagram for explaining the accumulated number of operation cycles of the engine.
FIG. 6B is a diagram for explaining the accumulated number of operation cycles at equal to or more than a load threshold of the engine.
FIG. 7 is a diagram for explaining a change in the parameter relating to the property of fuel with respect to the operation time.
FIG. 8 is a diagram for explaining a change in a CCAI value with respect to the operation time.
FIG. 9 is a diagram for explaining a change in exhaust gas temperature with respect to the operation time.
FIG. 10 is a diagram for explaining a total evaluation point.
FIG. 11 is a diagram for explaining the prediction of remaining lifetime.

Description of Embodiments

Hereinafter, an embodiment of the present invention will be described in detail with reference to the accompanying drawings. However, the invention is not limited to the embodiment. Moreover, in the drawings, the same reference numerals denote the same or corresponding elements.

Embodiment

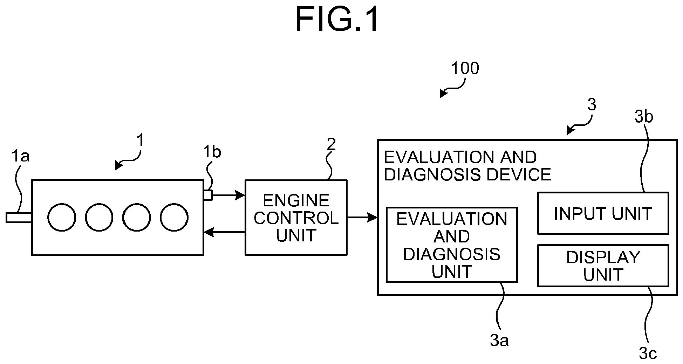

FIG. 1 is a schematic diagram illustrating a configuration of a system according to an embodiment. A system 100 evaluates the fatigue level of an engine 1 that is a marine diesel engine, an engine control unit 2 that controls the operation of the engine 1, and components of the engine 1. The system 100 also includes an evaluation and diagnosis device 3 for diagnosing the remaining lifetime.

The engine 1 is a two-stroke diesel engine such as a known uniflow scavenging crosshead diesel engine. For example, the engine 1 is a six-cylinder engine, but the number of cylinders is not particularly limited. An output shaft 1a of the engine 1 is connected to a propulsion propeller of a ship on which the engine 1 is installed, via a propeller shaft, which is not illustrated. The propulsion force of the ship is generated, when the engine 1 is operated and the propulsion propeller is rotated. Moreover, the engine 1 includes a temperature sensor 1b for measuring the temperature of exhaust gas.

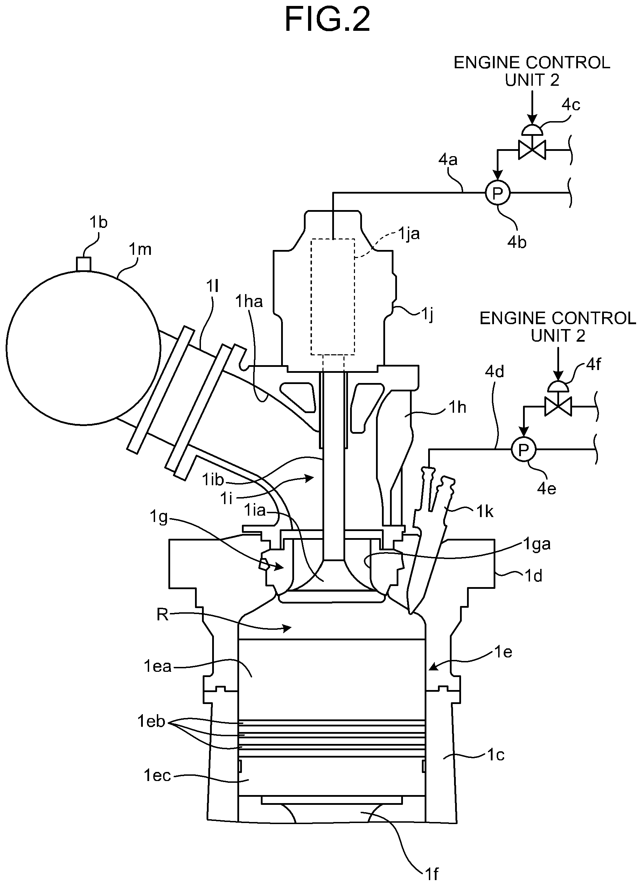

FIG. 2 is a schematic diagram illustrating a configuration near a combustion chamber of the engine 1. Because the configuration near the combustion chamber of any of the cylinders of the engine 1 is the same, one of the cylinders will be described.

The engine 1 includes a cylinder liner 1c, a cylinder cover 1d, a piston 1e, a piston rod 1f, an exhaust valve seat 1g, an exhaust valve box 1h, an exhaust valve 1i, a cover 1j, a fuel injection valve 1k, a connection pipe 11, and an exhaust manifold 1m.

The cylinder cover 1d is fixed to the upper portion of the cylinder liner 1c, and forms a cylindrical space in which the piston 1e reciprocates. The piston 1e includes a piston crown 1ea, a plurality (three in the present embodiment) of piston rings 1eb, and a piston skirt 1ec. Each of the piston rings 1eb is incorporated into the piston 1e, by being fitted into a groove provided on the piston crown 1ea. The piston rod 1f is connected to the piston 1e. The lower portion of the piston rod 1f is linked to a crank shaft via a crosshead, which is not illustrated. The crank shaft is linked to the output shaft 1a.

The exhaust valve 1i includes a valve body 1ia and a valve rod 1ib. The exhaust valve seat 1g is incorporated into the upper portion of the cylinder cover 1d. The exhaust valve seat 1g also forms an exhaust port 1ga, while the valve body 1ia of the exhaust valve 1i is configured such that the valve body 1ia can be freely seated. The cylinder liner 1c, the cylinder cover 1d, the piston 1e, and the valve body 1ia form a combustion chamber R.

The exhaust valve box 1h is fixed to the upper portion of the cylinder cover 1d. An exhaust port 1ha that communicates with the exhaust port 1ga of the exhaust valve seat 1g is formed on the exhaust valve box 1h. The exhaust valve box 1h also supports the valve rod 1ib of the exhaust valve 1i.

The cover 1j is fixed to the upper portion of the exhaust valve box 1h, and accommodates an exhaust valve operating device 1ja capable of moving the exhaust valve 1i in a reciprocating manner. In the exhaust valve operating device 1ja, the exhaust valve 1i is energized and supported by an energizing member (for example, a compression spring, an air spring, and the like), which is not illustrated, in a direction of closing the exhaust port 1ga. A hydraulic oil tank (not illustrated) is connected to one end of a hydraulic oil supplying pipe 4a, and the other end of the hydraulic oil supplying pipe 4a is connected to the exhaust valve operating device 1ja. An oil feeding pump 4b is provided in the middle part of the hydraulic oil supplying pipe 4a. When an opening and closing valve 4c is opened, while the exhaust valve 1i is closing the exhaust port 1ga by the energizing member, the oil feeding pump 4b is driven. Then, the hydraulic oil pressurized by the oil feeding pump 4b is supplied to the exhaust valve operating device 1ja via the hydraulic oil supplying pipe 4a, and moves the exhaust valve 1i downward against the energizing member. Then, the exhaust valve 1i opens the exhaust port 1ga while the opening and closing valve 4c is opened, and closes the exhaust port 1ga when the opening and closing valve 4c is closed. The opening and closing of the opening and closing valve 4c is controlled by an instruction signal from the engine control unit 2. Consequently, the timing to open and close the exhaust port 1ga is also controlled by the engine control unit 2.

The fuel injection valve 1k is fixed to the cylinder cover 1d, and can inject fuel (heavy oil, light oil, and the like) into the combustion chamber R. A fuel tank (not illustrated) is connected to one end of a fuel supplying pipe 4d, and the other end of the fuel supplying pipe 4d is connected to the fuel injection valve 1k. A fuel pump 4e is provided in the middle part of the fuel supplying pipe 4d. When an opening and closing valve 4f is opened, the fuel pump 4e is driven, and the fuel pressurized by the fuel pump 4e is supplied to the fuel injection valve 1k via the fuel supplying pipe 4d. Then, the fuel injection valve 1k injects fuel into the combustion chamber R, while the opening and closing valve 4f is opened. The opening and closing, and the opening degree of the opening and closing valve 4f is controlled by an instruction signal from the engine control unit 2. Consequently, the timing to open and close the fuel injection valve 1k, and the fuel injection amount are also controlled by the engine control unit 2.

The connection pipe 11 connects the exhaust port 1ha formed on the exhaust valve box 1h and the exhaust manifold 1m.

In the engine 1, the combustion gas inside the combustion chamber R is compressed, when the piston 1e moves upward after fuel gas such as air is introduced into the combustion chamber R from a scavenging port, which is not illustrated, and when the exhaust port 1ga is closed by the exhaust valve 1i. When the piston 1e moves to the top dead center, the pressure inside the combustion chamber R is turned into a predetermined compression pressure, and the fuel injection valve 1k injects fuel. Then, the combustion gas and the fuel are mixed and burnt in the combustion chamber R, and the piston 1e moves downward by the combustion energy. When the exhaust port 1ga is opened by the exhaust valve 1i at a predetermined timing, the exhaust gas (combusted gas) inside the combustion chamber R is discharged to the exhaust port 1ga. Then, the exhaust gas reaches the exhaust manifold 1m via the exhaust port 1ha and the connection pipe 11.

The temperature sensor 1b is a known temperature sensor such as a thermocouple and a thermistor. The temperature sensor 1b detects the temperature of exhaust gas in the exhaust manifold 1m, and outputs a detection signal according to the detected temperature to the engine control unit 2.

In the configuration illustrated in FIG. 2, the cylinder liner 1c, the cylinder cover 1d, the piston crown 1ea, the piston ring 1eb, the exhaust valve seat 1g, the exhaust valve box 1h, the exhaust valve 1i, and the fuel injection valve 1k are portions that constitute the combustion chamber R, or portions through which high-temperature exhaust gas discharged from the combustion chamber R pass. Consequently, the cylinder liner 1c, the cylinder cover 1d, the piston crown 1ea, the piston ring 1eb, the exhaust valve seat 1g, the exhaust valve box 1h, the exhaust valve 1i, and the fuel injection valve 1k are components the deterioration degree of which such as abrasion and wear tends to change easily according to the actual usage of the engine 1. Thus, in the present embodiment, the fatigue level and the remaining lifetime of the components are to be evaluated and diagnosed.

The description will continue by returning to FIG. 1. The engine control unit 2 includes an arithmetic unit such as a central processing unit (CPU), a recording unit such as a random-access memory (RAM) and a read-only memory (ROM), and the other peripheral function units. When the arithmetic unit executes a computer program recorded in the recording unit using the data recorded in the recording unit, the engine control unit 2 can implement the function. More specifically, by outputting an instruction signal and controlling the opening and closing valves 4c and 4f, the engine control unit 2 controls the timing to open and close the exhaust port 1ga, the timing to open and close the fuel injection valve 1k, and the fuel injection amount. Consequently, the engine control unit 2 can control the operation state of the engine 1. In this process, the engine control unit 2 calculates the rotation speed of the engine 1 and the injection amount of the fuel injection valve 1k to obtain the output (load of the engine 1) required for the engine 1 to allow the ship to sail at the requested cruising speed. To implement the rotation speed and the injection amount, the engine control unit 2 then controls the timing to open and close the exhaust port 1ga and the fuel injection valve 1k, and the fuel injection amount of the fuel injection valve 1k.

Moreover, at least during the operation period of the engine 1, on the basis of a detection signal supplied from the temperature sensor 1b, the engine control unit 2 calculates the temperature measured by the temperature sensor 1b. In the present embodiment, the engine control unit 2 sets the temperature measured by the temperature sensor 1b or the temperature obtained by multiplying the measured temperature by a correction coefficient, as the temperature of the exhaust gas. Furthermore, the engine control unit 2 outputs an information signal including information required for evaluation and diagnosis, to the evaluation and diagnosis device 3. In the present embodiment, the engine control unit 2 outputs an information signal including information such as load and rotation speed of the engine 1, operation time, and the temperature of exhaust gas, to the evaluation and diagnosis device 3. For example, the information signal is output as required or on a regular basis while the engine 1 is operated.

The evaluation and diagnosis device 3 includes an evaluation and diagnosis unit 3a, an input unit 3b, a display unit 3c, and the other peripheral function units. The evaluation and diagnosis unit 3a includes an arithmetic unit such as the CPU, a recording unit such as the RAM and the ROM, and the other peripheral function units. When the arithmetic unit executes the computer program recorded in the recording unit using the data recorded in the recording unit, the evaluation and diagnosis unit 3a implements the function.

The input unit 3b inputs data to the evaluation and diagnosis device 3 from outside. For example, the input unit 3b includes a keyboard and a mouse used by an operator to enter data. The data supplied from the outside is recorded in the recording unit of the evaluation and diagnosis unit 3a. Moreover, the display unit 3c displays the input data and the evaluated and diagnosed results. For example, the display unit 3c includes various display devices such as a liquid crystal display and an organic electroluminescence (EL) display. For example, the input unit 3b and the display unit 3c may be integrally constituted by a display with a touch panel function.

Function of Evaluation and Diagnosis Device

Next, the function of the evaluation and diagnosis device 3 will be described. The evaluation and diagnosis device 3 generates an operation load evaluation point relating to the operation load of the engine 1, an operation load variation evaluation point relating to variation of the operation load of the engine 1, an operation cycle evaluation point relating to the operation cycle of the engine 1, a fuel property evaluation point relating to the property of the fuel of the engine 1, a combustibility evaluation point relating to the combustibility of the fuel, and an exhaust gas temperature evaluation point relating to the temperature of the exhaust gas of the engine 1, for the target component. Then, by adding the generated evaluation points, the evaluation and diagnosis device 3 calculates the total evaluation point of the fatigue level of the target component. Then, on the basis of the total evaluation point, the evaluation and diagnosis device 3 evaluates the fatigue level of the target component. Moreover, on the basis of the fatigue level, the evaluation and diagnosis device 3 diagnoses the remaining lifetime of the target component. The evaluation and diagnosis device 3 functions as a fatigue level evaluation device for evaluating the fatigue level and a remaining lifetime diagnosis device for diagnosing the remaining lifetime. Furthermore, the evaluation and diagnosis unit 3a functions as a calculation unit for calculating the total evaluation point, an evaluation unit for evaluating the fatigue level, and a diagnosis unit for diagnosing the remaining lifetime.

In the following, the evaluations points are first described using specific examples, and calculation of the total evaluation point, evaluation of the fatigue level, and diagnosis of the remaining lifetime are then sequentially described. The evaluation point is zero point when the engine 1 is started to be used, and is reset to zero point again when the target component is replaced.

Operation Load Evaluation Point

The operation load evaluation point is an evaluation point relating to the operation load of the engine 1, and is an index indicating the influence of the operation load of the engine 1, applied on the fatigue level of the target component.

In the present embodiment, the operation load evaluation point is specified so as to include a product of the average load factor of the engine 1 during the operation time, from when the engine 1 is started to be used, or from when the target component is started to be used after the last replacement, up to the present time; and a fatigue level influence coefficient relating to the operation load. For example, in this example, the present time is the time corresponding to the latest information, in a range of information supplied to the evaluation and diagnosis device 3 from the engine control unit 2. The same also applies to the other evaluation points. Moreover, for example, the load factor is the ratio of the engine 1 to the maximum rated load. Furthermore, the fatigue level influence coefficient relating to the operation load is a coefficient indicating the degree of influence of the operation load, applied on the fatigue level and lifetime of the component. The fatigue level influence coefficient is determined by data obtained by preliminary experiments, data accumulated by the past operation results, and the like, and is set for each of the components.

When the average load is large, the load on the component is also large, thus affecting the fatigue level.

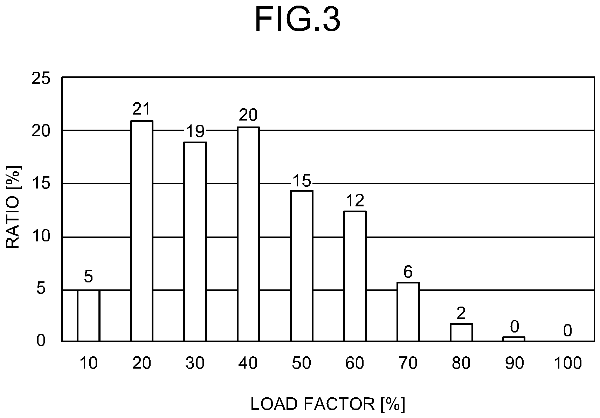

FIG. 3 is a diagram illustrating an example of a relation between a load factor of the engine 1 and a ratio of operation time of the engine 1 at the load factor. FIG. 3 illustrates the actual operation time of the engine 1 during a period of about three and a half month. For example, in the example illustrated in FIG. 3, the actual operation time is about 8600 hours. FIG. 3 illustrates that the ratio of the operation time of the engine 1 operated at a load factor of 10% is 5%, with respect to the actual operation time. Moreover, in the example illustrated in FIG. 3, the average load is 39%.

In this process, for example, an operation load evaluation point C1 is expressed by the following formula (1) .

$$C1 = (A_{avr}/100) \times B1 \hspace{4cm} (1)$$

In this example, $A_{avr}$ is the average load [%], and B1 is a fatigue level influence coefficient relating to the operation load.

In the evaluation and diagnosis device 3, the evaluation and diagnosis unit 3a generates C1 on the basis of $A_{avr}$ calculated based on the information supplied from the engine control unit 2, and B1 recorded in the recording unit of the evaluation and diagnosis unit 3a through calculation. The evaluation and diagnosis unit 3a then records C1 in the recording unit. Moreover, the evaluation and diagnosis unit 3a may cause the display unit 3c to display C1.

Operation Load Variation Evaluation Point

The operation load variation evaluation point is an evaluation point relating to variation of the operation load of the engine 1, and is an index indicating the influence of variation of the operation load of the engine 1, applied on the fatigue level of the target component.

In the present embodiment, the operation load variation evaluation point is specified so as to include a product of the accumulated number of starts and stops of the engine 1, from when the engine 1 is started to be used, or from when the target component is started to be used after the last replacement, up to the present time; and a fatigue level influence coefficient relating to the accumulated number of starts and stops. The operation load variation evaluation point also includes a product of the accumulated number of reciprocating operations up to the present time, and a fatigue level influence coefficient relating to the accumulated number of reciprocating operations.

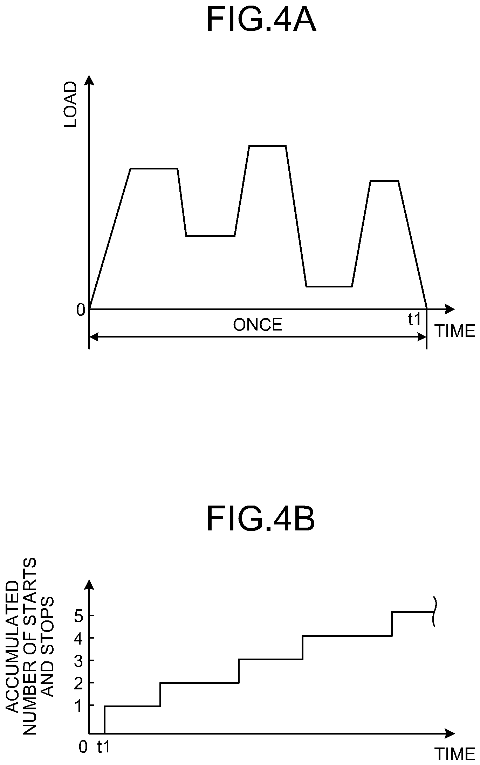

As illustrated in FIG. 4A, for example, in the accumulated number of starts and stops, the number of starts and stops is counted as once, when the engine 1 starts operating at time zero, is operated at a certain load variation, and then stops operating when the load becomes zero. In FIG. 4A, the number of starts and stops is counted as once at time t1. Consequently, as illustrated in FIG. 4B, the accumulated number of starts and stops is counted as once at time t1. The accumulated number of starts and stops is increased by repeating the starts and stops of the operation. The horizontal axis in FIG. 4B is the operation time.

The fatigue level influence coefficient relating to the accumulated number of starts and stops is a coefficient indicating the degree of influence of the accumulated number of starts and stops, applied on the fatigue level and lifetime of the component. The fatigue level influence coefficient is determined by data obtained by preliminary experiments, data accumulated by the past operation results, and the like, and is set for each of the components.

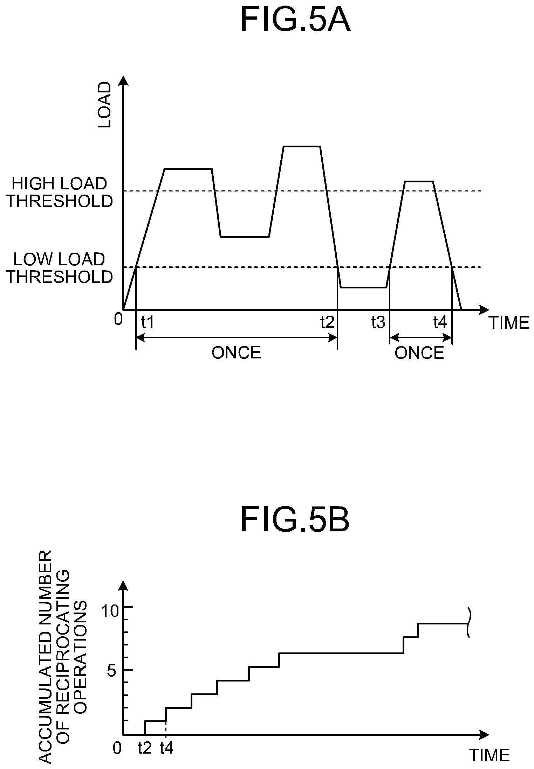

The accumulated number of reciprocating operations is an accumulated value of the number of reciprocating operations performed between the low load region and the high load region of the engine 1. More specifically, as illustrated in FIG. 5A, for example, it is assumed that the engine 1 starts operating at time zero, the load becomes equal to or more than a low load threshold at time t1, then becomes equal to or more than a high load threshold, and subsequently becomes lower than the low load threshold at time t2. In this case, the engine 1 is operated so as to reciprocate between the low load region, which is lower than the low load threshold, and the high load region, which is equal to or more than the high load threshold. Consequently, the number of reciprocating operations is counted as once. Similarly, even when the load becomes equal to or more than the low load threshold at time t3, then becomes equal to or more than the high load threshold, and subsequently becomes lower than the low load threshold at time t4, the number of reciprocating operations is counted as once. Thus, as illustrated in FIG. 5B, the accumulated number of reciprocating operations is counted as once at time t2, counted as twice at time t4, and is increased by repeating the reciprocating operation. The horizontal axis in FIG. 5B is the operation time. Moreover, the low load threshold and the high load threshold are set for each of the components.

Furthermore, the fatigue level influence coefficient relating to the accumulated number of reciprocating operations is a coefficient indicating the degree of influence of the accumulated number of reciprocating operations, applied on the fatigue level and lifetime of the component. The fatigue level influence coefficient is determined by data obtained by preliminary experiments, data accumulated by the past operation results, and the like, and is set for each of the components.

When the starts and stops or the reciprocating operations are repeated, the temperature of the material of the component such as metal is repeatedly increased and decreased. Consequently, the component will be deteriorated by stress, thus affecting the fatigue level. In particular, the fatigue level of the piston 1e and the exhaust valve 1i is easily affected. Hence, the fatigue level influence coefficient set to the components will be increased.

In this process, for example, an operation load variation evaluation point C2 is expressed by the following formulae (2-1) to (2-3).

$$C2 = C21 + C22 \quad \dots (2-1)$$

$$C21 = (D1/D3) \times B21 \dots (2-2)$$

$$C22 = (D2/D4) \times B22 \dots (2-3)$$

In this process, C21 is an evaluation point for the accumulated number of starts and stops, and C22 is an evaluation point for the accumulated number of reciprocating operations. Moreover, D1 is the accumulated number of starts and stops, D2 is the accumulated number of reciprocating operations, D3 is the accumulated number of starts and stops estimated during the lifetime of the component, D4 is the accumulated number of reciprocating operations estimated during the lifetime of the component, B21 is a fatigue level influence coefficient relating to the accumulated number of starts and stops, and B22 is a fatigue level influence coefficient relating to the accumulated number of reciprocating operations.

In the evaluation and diagnosis device 3, the evaluation and diagnosis unit 3a generates C2 on the basis of D1 and D2 calculated based on the information supplied from the engine control unit 2, and D3, D4, B21, and B22 recorded in the recording unit of the evaluation and diagnosis unit 3a through calculation. The evaluation and diagnosis unit 3a then records C2 in the recording unit. Moreover, the evaluation and diagnosis unit 3a may cause the display unit 3c to display C2.

Operation Cycle Evaluation Point

The operation cycle evaluation point is an evaluation point relating to the operation cycle of the engine 1, and is an index indicating the influence of the operation cycle of the engine 1, applied on the fatigue level of the target component.

In the present embodiment, the operation cycle evaluation point is specified so as to include a product of the accumulated number of operation cycles of the engine 1, from when the engine 1 is started to be used, or from when the target component is started to be used after the last replacement, up to the present time; and a fatigue level influence coefficient relating to the accumulated number of operation cycles. The operation cycle evaluation point also includes a product of the accumulated number of operation cycles at equal to or more than a load threshold up to the present time, and a fatigue level influence coefficient relating to the accumulated number of operation cycles at equal to or more than a load threshold.

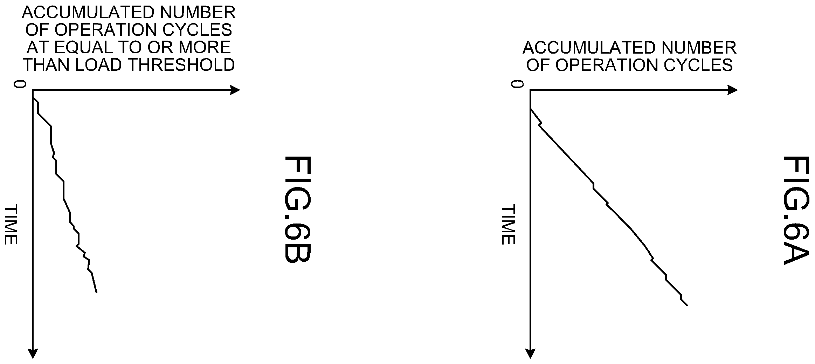

As illustrated in FIG. 6A, the accumulated number of operation cycles is an accumulated value of operation cycles. The operation cycle is a cycle of operation of the engine 1, and when the output shaft 1a of the engine 1 is rotated once, the operation cycle is counted as once. The accumulated number of operation cycles is increased with an increase in the operation time indicated by the horizontal axis.

The fatigue level influence coefficient relating to the accumulated number of operation cycles is a coefficient indicating the degree of influence of the accumulated number of operation cycles, applied on the fatigue level and lifetime of the component. The fatigue level influence coefficient is determined by data obtained by the preliminary experiment, data accumulated by the past operation results, and the like, and is set for each of the components.

As illustrated in FIG. 6B, the accumulated number of operation cycles at equal to or more than a load threshold is obtained by counting the operation cycle of the engine 1 operated at a load factor of equal to or more than the set load factor (load threshold) as once, and accumulating the operation cycles. The load threshold is set for each of the components. For example, the load threshold is 50%. The horizontal axis is the operation time.

Moreover, the fatigue level influence coefficient relating to the accumulated number of operation cycles at equal to or more than a load threshold is a coefficient indicating the degree of influence of the accumulated number of operation cycles at equal to or more than a load threshold, applied on the fatigue level and lifetime of the component. The fatigue level influence coefficient is determined by data obtained by preliminary experiments, data accumulated by the past operation results, and the like, and is set for each of the components.

When the accumulated number of operation cycles or the accumulated number of operation cycles at equal to or more than a load threshold is large, the number of times the cylinder liner 1c or the piston ring 1eb slides is increased. In particular, the influence on the fatigue level of these components is large. Thus, the fatigue level influence coefficient set for these components will be increased.

In this process, for example, an operation cycle evaluation point C3 is expressed by the following formulae (3-1) to (3-3).

$$C3 = C31 + C32 \qquad ... \quad (3-1)$$

$$C31 = (E1/E2) \times B31 \;...\; (3-2)$$

$$C32 = (E3/E4) \times B32 \;...\; (3-3)$$

In this process, C31 is an evaluation point for the accumulated number of operation cycles, and C32 is an evaluation point for the accumulated number of operation cycles at equal to or more than a load threshold. Moreover, E1 is the accumulated number of operation cycles, E2 is the accumulated number of operation cycles estimated during the lifetime of the component, E3 is the accumulated number of operation cycles at equal to or more than a load threshold, E4 is the accumulated number of operation cycles at equal to or more than a load threshold estimated during the lifetime of the component, B31 is a fatigue level influence coefficient relating to the accumulated number of operation cycles, and B32 is a fatigue level influence coefficient relating to the accumulated number of operation cycles at equal to or more than a load threshold.

In the evaluation and diagnosis device 3, the evaluation and diagnosis unit 3a generates C3 on the basis of E1 and E3 calculated based on the information supplied from the engine control unit 2, and E2, E4, B31, and B32 recorded in the recording unit of the evaluation and diagnosis unit 3a through calculation. The evaluation and diagnosis unit 3a then records C3 in the recording unit. Moreover, the evaluation and diagnosis unit 3a may cause the display unit 3c to display C3.

Fuel Property Evaluation Point

The fuel property evaluation point is an evaluation point relating to the property of fuel of the engine 1, and is an index indicating the influence of the property of fuel applied on the fatigue level of the target component.

In the present embodiment, the fuel property evaluation point is specified so as to include a product of concentration of ingredients contained in the fuel used from when the engine 1 is started to be used, or from when the target component is started to be used after the last replacement, up to the present time; and a fatigue level influence coefficient relating to the concentration. The fuel property evaluation point also includes a product of ratio of concentration of two ingredients contained in the fuel used up to the present time, and a fatigue level influence coefficient relating to the ratio.

For example, the concentration of ingredients contained in the fuel includes one or more concentrations selected from the group consisting of sulfur (S) concentration (S concentration), vanadium (V) concentration (V concentration), sodium (Na) concentration (Na concentration), the total concentration of aluminum (Al) and silicon (Si)(hereinafter, referred to as Al + Si concentration), and sediment concentration. In the present embodiment, all concentrations are used. Moreover, mass % is used as the concentration.

Moreover, the fatigue level influence coefficient relating to the concentration of ingredient is a coefficient indicating the degree of influence of the ingredient, applied on the fatigue level and lifetime of the component. The fatigue level influence coefficient is determined by data obtained by preliminary experiments, data accumulated by the past operation results, and the like, and is set for each of the components.

Furthermore, as the ratio of concentration of the two ingredients contained in the fuel, in the present embodiment, the ratio of Na concentration with respect to V concentration (Na/V) is used.

Still furthermore, the fatigue level influence coefficient relating to the ratio of concentration is a coefficient indicating the degree of influence of the ratio of concentration, applied on the fatigue level and lifetime of the component. The fatigue level influence coefficient is determined by data obtained by preliminary experiments, data accumulated by the past operation results, and the like, and is set for each of the components.

For example, sulfur generates sulfuric acid by reacting with moisture during the combustion, and may cause corrosion of the component. When the S concentration is high, an influence on the fatigue level of the piston ring 1eb, the cylinder liner 1c, and the exhaust valve box 1h is high. Moreover, when sulfur, vanadium, or sodium is used, the ingredients adhering on the wall surface of the combustion chamber R may be melted under a high temperature or by being burnt directly, and may cause corrosion by chemically reacting with the component. When the S concentration, the V concentration, or the Na concentration is high, an influence on the fatigue level of the piston crown 1ea, the exhaust valve 1i, and the cylinder cover 1d is high. Moreover, when Na/V is high, high-temperature corrosion is accelerated. Thus, an influence on the fatigue level of the piston crown 1ea, the exhaust valve 1i, and the cylinder cover 1d is high. Furthermore, when (Al + Si concentration) is high, Al and Si may become fine hard particles and cause abnormal abrasion of the sliding parts. Thus, an influence on the fatigue level of the piston ring 1eb, the cylinder liner 1c, and the fuel injection valve 1k is high. Still furthermore, sediment forms sludge. Consequently, when the sediment concentration is high, sludge may enter the sliding part or the seat part of the exhaust valve 1i, and cause abrasion and seat failure. Thus, an influence on the fatigue level of the piston ring 1eb, the cylinder liner 1c, the exhaust valve seat 1g, and the fuel injection valve 1k is high. The fatigue level influence coefficient set for the highly affected components described above will be increased.

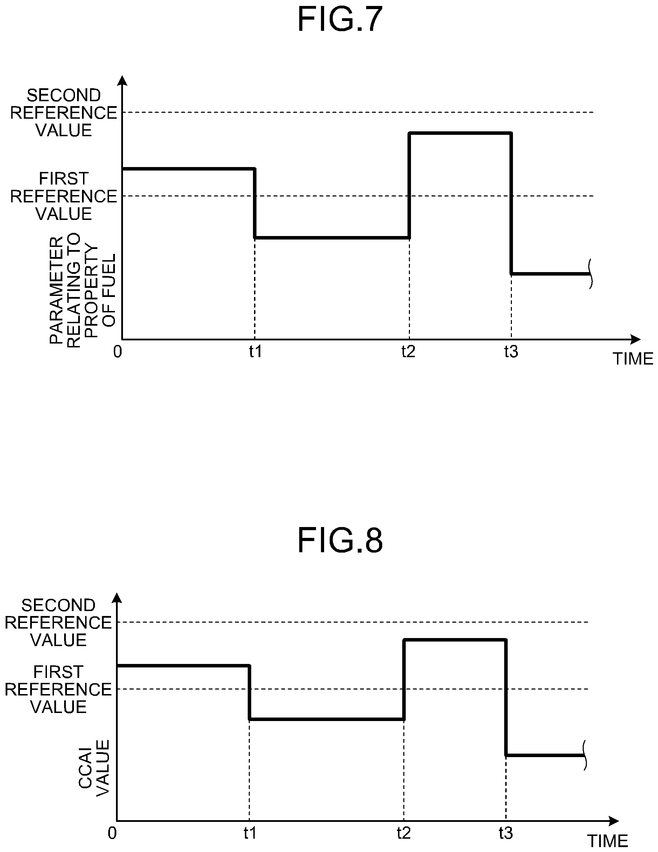

Moreover, FIG. 7 is a diagram for explaining a change in the parameter relating to the property of fuel with respect to the operation time. In this example, the parameter relating to the property of fuel is the concentration of ingredients contained in the fuel, or the ratio of concentration of two ingredients.

In FIG. 7, the engine 1 is loaded with fuel having a predetermined property, and is operated from time zero to time t1. The time when the engine 1 is started to be used, or the time when the target component is started to be used after the last replacement is set to time zero. Then, the engine 1 uses fuel with another property from time t1, and is operated to time t2. Moreover, it is assumed that the engine 1 uses fuel with still another property from time t2, is operated to time t3, then uses different fuel from time t3, and is operated thereafter. For example, the fuel used after time t1 is fuel obtained by supplying different fuel anew to the remaining fuel that has been used up to then, or different fuel loaded anew.

As illustrated in FIG. 7, depending on the property of the fuel to be used, the parameter may be varied. In the present embodiment, a first reference value and a second reference value are set for each of the parameters, and a weighting coefficient is used according to the size of the value of each parameter. For example, when the value of the parameter is less than the first reference value, a first weighting coefficient is used. When the value of the parameter is equal to or more than the first reference value and is less than the second reference value, a second weighting coefficient is used. When the value of the parameter is equal to or more than the second reference value, a third weighting coefficient is used. In this example, the first weighting coefficient is set to 1, and a magnitude relation is established so as to satisfy (first weighting coefficient) < (second weighting coefficient) < (third weighting coefficient). The reason why such a magnitude relation is established is because in the present embodiment, an influence on the fatigue level is increased with an increase in the value of the parameter. It is to be noted that the first reference value and the second reference value are set for each parameter, but the weighting coefficient may be a value commonly used in all parameters. Moreover, in the present embodiment, two reference values of the first reference value and the second reference value are used. Alternatively, one, or three or more reference values may be used.

In this process, for example, a fuel property evaluation point C4 is expressed by the following formulae (4-1) to (4-7).

$$C4 = C41 + C42 + C43 + C44 + C45 + C46 \quad \ldots (4\text{-}1)$$

$$C41 = [(F1 \times T41)/T7] \times B41 \quad \ldots (4\text{-}2)$$

$$C42 = [(F2 \times T42)/T7] \times B42 \quad \ldots (4\text{-}3)$$

$$C43 = [(F3 \times T43)/T7] \times B43 \quad \ldots (4\text{-}4)$$

$$C44 = [(F4 \times T44)/T7] \times B44 \quad \ldots (4\text{-}5)$$

$$C45 = [(F5 \times T45)/T7] \times B45 \quad \ldots (4\text{-}6)$$

$$C46 = [(F6 \times T46)/T7] \times B46 \quad \ldots (4\text{-}7)$$

In this example, C41 is an evaluation point for the S concentration, C42 is an evaluation point for the V concentration, C43 is an evaluation point for the Na concentration, C44 is an evaluation point for Na/V, C45 is an evaluation point for the (Al + Si) concentration, and C46 is an evaluation point for the sediment concentration. Moreover, F1 is a weighting coefficient for the S concentration, F2 is a weighting coefficient for the V concentration, F3 is a weighting coefficient for the Na concentration, F4 is a weighting coefficient for Na/V, F5 is a weighting coefficient for the (Al + Si) concentration, and F6 is a weighting coefficient for the sediment concentration. F1 to F6 are recorded in the recording unit of the evaluation and diagnosis unit 3a. Moreover, T41 is the operation time (h) when the S concentration has exceeded the first reference value, T42 is the operation time (h) when the V concentration has exceeded the first reference value, T43 is the operation time (h) when the Na concentration has exceeded the first reference value, T44 is the operation time (h) when Na/V has exceeded the first reference value, T45 is the operation time (h) when the (Al + Si) concentration has exceeded the first reference value, and T46 is the operation time (h) when the sediment concentration has exceeded the first reference value. These operation times are calculated by the evaluation and diagnosis unit 3a, on the basis of the information relating to the operation time supplied from the engine control unit 2, and the information recorded in the recording unit. Moreover, T7 is the operation time of the engine 1 estimated during the lifetime, and is recorded in the recording unit. Furthermore, B41 is a fatigue level influence coefficient relating to the S concentration, B42 is a fatigue level influence coefficient relating to the V concentration, B43 is a fatigue level influence coefficient relating to the Na concentration, B44 is a fatigue level influence coefficient relating to Na/V, B45 is a fatigue level influence coefficient relating to the (Al + Si) concentration, and B46 is a fatigue level influence coefficient relating to the sediment concentration. B41 to B46 are recorded in the recording unit.

The parameters of the S concentration, the V concentration, the Na concentration, Na/V, the (Al + Si) concentration, and the sediment concentration are obtained by performing an analysis on the ingredients of the fuel, every time the property of the fuel to be used are changed. Then, for example, an operator supplies the values of the parameters obtained from the input unit 3b of the evaluation and diagnosis device 3. The evaluation and diagnosis unit 3a records the supplied values in the recording unit.

Then, in the evaluation and diagnosis device 3, the evaluation and diagnosis unit 3a generates C4 through calculation, and records C4 in the recording unit. Moreover, the evaluation and diagnosis unit 3a may cause the display unit 3c to display C4.

Combustibility Evaluation Point

The combustibility evaluation point is an evaluation point relating to the combustibility of fuel, and is an index indicating the influence of the combustibility to be used, applied on the fatigue level of the target component.

In the present embodiment, the combustibility evaluation point is specified so as to include a product of a value of a calculated carbon aromaticity index (CCAI) of the fuel used from when the engine 1 is started to be used, or from when the target component is started to be used after the last replacement, up to the present time; and a fatigue level influence coefficient relating to the combustibility set for each of the components.

The CCAI is specified by $D - 140.7 \times \log_{10}\log_{10} (V + 0.85) - A$, and is an index for evaluating the ignitability of residue fuel oil. In this example, D is density (kg/m$_3$) of the fuel at 15 degrees Celsius, and V is kinematic viscosity (mm$^2$/s) of the fuel at 50 degrees Celsius or 100 degrees Celsius. When V is the kinematic viscosity at 50 degrees Celsius, A is 80.6. When V is the kinematic viscosity at 100 degrees Celsius, A is 111.

Moreover, the fatigue level influence coefficient relating to combustibility is a coefficient indicating the degree of influence of the combustibility, applied on the fatigue level and lifetime of the component. The fatigue level influence coefficient is determined by data obtained by preliminary experiments, data accumulated by the past operation results, and the like, and is set for each of the components.

The ignition delay time of fuel is extended with an increase in the CCAI. When the ignition delay time is long, it is difficult to obtain an output even when the same amount of fuel is used. Consequently, the fuel injection amount may need to be increased at a certain load. Moreover, if there is an ignition delay, influence of the high-temperature combustion chamber R is applied until the piston 1e moves further downward. Consequently, the lubricating oil of the sliding part is burnt, and the deterioration of the sliding part by abrasion and heat may be increased. Thus, the fatigue level influence coefficient set for the affected components will be increased.

Moreover, FIG. 8 is a diagram for explaining a change in the CCAI value with respect to the operation time. In FIG. 8, the engine 1 is loaded with fuel with a certain combustibility, and is operated from time zero to time t1. The time when the engine 1 is started to be used, or the time when the target component is started to be used after the last replacement is set to time zero. The engine 1 then uses fuel with another combustibility from time t1, and is operated until time t2. Furthermore, it is assumed that the engine 1 uses fuel with still another combustibility from time t2, is operated to time t3, uses fuel with still another combustibility from time t3, and is operated thereafter. For example, the fuel used after time t1 is fuel obtained by supplying different fuel anew to the remaining fuel that has been used up to then, or different fuel loaded anew.

As illustrated in FIG. 8, the CCAI value may vary according to the combustibility of the fuel to be used. In the present embodiment, a first reference value and a second reference value are set for the CCAI value, and a weighting coefficient is used according to the size of the CCAI value. For example, when the CCAI value is less than the first reference value, the first weighting coefficient is used. When the CCAI value is equal to or more than the first reference value and less than the second reference value, the second weighting coefficient is used. When the CCAI value is equal to or more than the second reference value, the third weighting coefficient is used. In this example, the first weighting coefficient is set to 1, and a magnitude relation is established so as to satisfy (first weighting coefficient) < (second weighting coefficient) < (third weighting coefficient). The reason why such a magnitude relation is established is because in the present embodiment, an influence on the fatigue level is increased with an increase in the CCAI value. It is to be noted that in the present embodiment, two reference values of the first reference value and the second reference value are used. Alternatively, one, or three or more reference values may be used.

In this process, for example, a combustibility evaluation point C5 is expressed by the following formula (5).

$$C5 = [(G1 \times T51)/T52] \times B5 \qquad (5)$$

In this example, G1 is a weighting coefficient, and is recorded in the recording unit of the evaluation and diagnosis unit 3a. Moreover, T51 is the operation time (h) when the CCAI value has exceeded the first reference value. T51 is calculated by the evaluation and diagnosis unit 3a on the basis of the information relating to the operation time supplied from the engine control unit 2, and the information recorded in the recording unit. Furthermore, T52 is the operation time of the engine 1 estimated during the lifetime, and is recorded in the recording unit. Still furthermore, B5 is a fatigue level influence coefficient relating to combustibility, and is recorded in the recording unit.

Every time the fuel to be used is changed, the CCAI value is obtained by analyzing the fuel. Then, for example, an operator supplies the CCAI value obtained from the input unit 3b of the evaluation and diagnosis device 3. The evaluation and diagnosis unit 3a records the supplied CCAI value in the recording unit.

Then, in the evaluation and diagnosis device 3, the evaluation and diagnosis unit 3a generates C5 through calculation, and records C5 in the recording unit. Moreover, the evaluation and diagnosis unit 3a may cause the display unit 3c to display C5.

Exhaust Gas Temperature Evaluation Point

The exhaust gas temperature evaluation point is an evaluation point relating to the temperature of exhaust gas of the engine 1, and is an index indicating the influence of the temperature of the exhaust gas, applied on the fatigue level of the target component.

In the present embodiment, the exhaust gas temperature evaluation point is specified so as to include a product of the temperature of the exhaust gas measured using the temperature sensor 1b, from when the engine 1 is started to be used, or from when the target component is started to be used after the last replacement, up to the present time; and a fatigue level influence coefficient relating to the temperature of the exhaust gas.

In the present embodiment, the temperature sensor 1b is provided in the exhaust manifold 1m. However, the temperature sensor 1b may also be provided in the other location such as the connection pipe 11.

Moreover, the fatigue level influence coefficient relating to the temperature of the exhaust gas is a coefficient indicating the degree of influence of the temperature of the exhaust gas, applied on the fatigue level and lifetime of the component. The fatigue level influence coefficient is determined by data obtained by preliminary experiments, data accumulated by the past operation results, and the like, and is set for each of the components.

When the components near the combustion chamber R are exposed to the high-temperature exhaust gas of a predetermined temperature or more after the fuel is burnt, thermal fatigue is generated. When the thermal fatigue is accumulated, the risk of high-temperature corrosion is increased. Consequently, the fatigue level influence coefficient set for the components exposed to the exhaust gas will be increased.

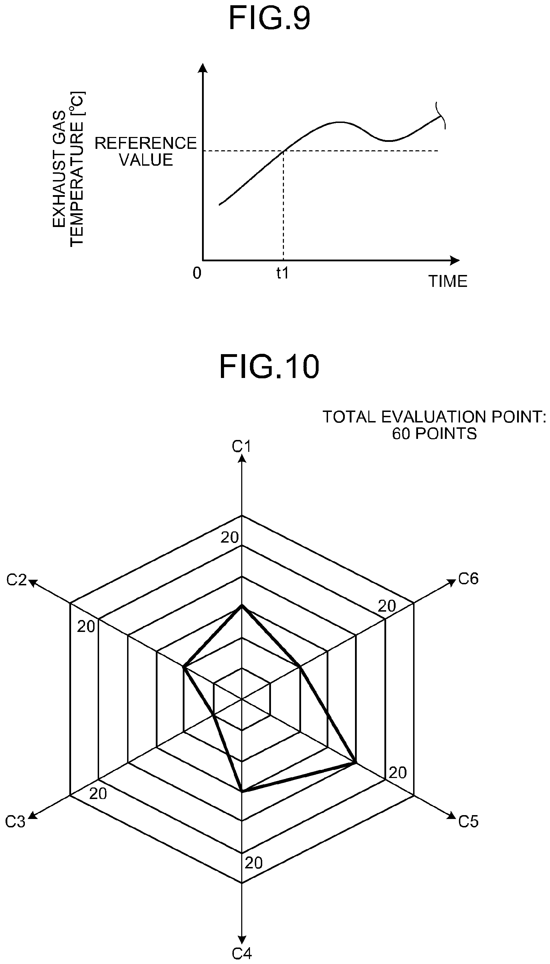

Moreover, FIG. 9 is a diagram for explaining a change in the exhaust gas temperature with respect to the operation time. As illustrated in FIG. 9, the exhaust gas temperature changes according to the load of the engine 1 and the like, from when the engine 1 is started to be used, or from when the target component is started to be used after the last replacement, and exceeds the reference value at time t1. In the present embodiment, the reference value is set for the exhaust gas temperature, and the weighting coefficient is used according to the exhaust gas temperature. For example, when the exhaust gas temperature is less than the reference value, the first weighting coefficient is used. When the exhaust gas temperature is equal to or more than the reference value, the second weighting coefficient is used. In this example, the first weighting coefficient is set to 1, and a magnitude relation is established so as to satisfy (first weighting coefficient) < (second weighting coefficient). In the present embodiment, one reference value is used.

Alternatively, two or more reference values may be used.

In this process, for example, an exhaust gas temperature evaluation point C6 is expressed by the following formula (6).

$$C6 = [(H1 \times T61)/T62] \times B6 \qquad (6)$$

In this example, H1 is a weighting coefficient, and is recorded in the recording unit of the evaluation and diagnosis unit 3a. Moreover, T61 is the operation time (h) when the exhaust gas temperature has exceeded the reference value. T61 is calculated by the evaluation and diagnosis unit 3a on the basis of the information relating to the operation time and the exhaust gas temperature supplied from the engine control unit 2, and the information recorded in the recording unit. Moreover, T62 is the operation time of the engine 1 estimated during the lifetime, and is recorded in the recording unit. Furthermore, B6 is a fatigue level influence coefficient relating to the exhaust gas temperature, and is recorded in the recording unit.

In the evaluation and diagnosis device 3, the evaluation and diagnosis unit 3a generates C6 through calculation, and records C6 in the recording unit. Moreover, the evaluation and diagnosis unit 3a may cause the display unit 3c to display C6.

In the evaluation and diagnosis device 3, after generating the evaluation points C1 to C6 as described above, the evaluation and diagnosis unit 3a adds the evaluation points C1 to C6 as in the formula (7), and calculates a total evaluation point C of the fatigue level of the target component at the present time.

$$C = C1 + C2 + C3 + C4 + C5 + C6 \qquad (7)$$

FIG. 10 is a diagram for explaining the total evaluation point. In FIG. 10, the radar chart is used to indicate the evaluation points C1 to C6, and is indicating when C1 is 12 points, C2 is 8 points, C3 is 4 points, C4 is 12 points, C5 is 16 points, and C6 is 8 points. In this case, the total evaluation point is 60 points. The evaluation and diagnosis unit 3a may also cause the display unit 3c to display the radar chart and the total evaluation point C as described in FIG. 10.

In the present embodiment, the evaluation and diagnosis unit 3a determines that the component has reached the end of its lifetime, when the total evaluation point of the target component reaches 100 points. The evaluation and diagnosis unit 3a evaluates that the fatigue level of the target component at the present time is the total evaluation point at the present time with respect to 100 points. For example, when the total evaluation point is 60 points, the evaluation and diagnosis unit 3a evaluates that the fatigue level of the target component is about 60% of the lifetime.

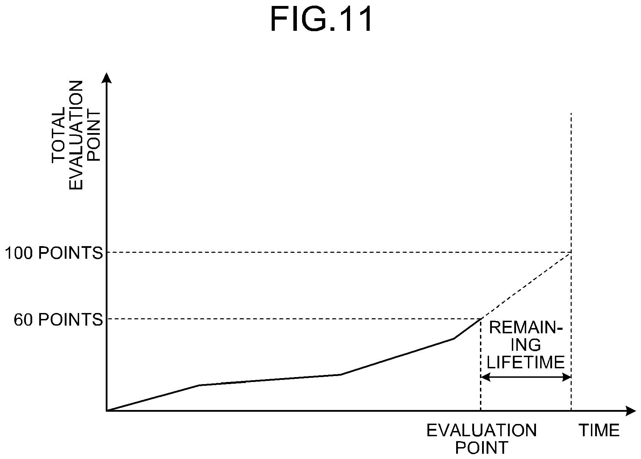

FIG. 11 is a diagram for explaining the prediction of remaining lifetime. The evaluation and diagnosis unit 3a evaluates the fatigue level by calculating the total evaluation point as required or on a regular basis, from when the engine 1 is started to be used, or from when the target component is started to be used after the last replacement. From the trend of the total evaluation point of the fatigue level up to the present time, the evaluation and diagnosis unit 3a predicts when the total evaluation point reaches 100 points, in other words, when the component reaches the end of its lifetime. The evaluation and diagnosis unit 3a then diagnoses the time from the present time to when the component reaches the end of its lifetime, as the remaining lifetime. In the example illustrated in FIG. 11, the remaining lifetime is measured when the total evaluation point is at 60 points. However, the remaining lifetime may also be diagnosed at the other point such as 80 points and 90 points.

With the evaluation and diagnosis device 3 of the system 100 according to the present embodiment, it is possible to estimate the maintenance intervals and maintenance time of the component, according to the actual usage conditions of the engine 1. As a result, it is possible to more appropriately present inspection and replacement times for the components of the engine 1. Moreover, because such estimation and presentation are possible, it is possible to suppress or prevent unnecessary inspections and replacements. Consequently, it is possible to reduce the labor expenses and the expenses required for replacing the parts, and improve the operation efficiency of the engine 1. Moreover, by estimating the remaining lifetime of the components of the engine 1, it is possible to perform planned maintenance.

In the present embodiment described above, the total evaluation point includes the exhaust gas temperature evaluation point. However, the present invention is not limited to the above, and the total evaluation point may be calculated by adding the operation load evaluation point, the operation load variation evaluation point, the operation cycle evaluation point, the fuel property evaluation point, and the combustibility evaluation point, without including the exhaust gas temperature evaluation point. Alternatively, the total evaluation point may also be calculated by generating at least two evaluation points among the operation load evaluation point, the operation load variation evaluation point, the operation cycle evaluation point, the fuel property evaluation point, the combustibility evaluation point, and the exhaust gas temperature evaluation point, and by adding the generated at least two evaluation points.

Moreover, the present invention is not limited by the embodiment described above. The present invention includes those configured by suitably combining the components described above. Moreover, further effects and modifications can be easily derived by those skilled in the art. Thus, the broader aspects of the present invention are not limited to the embodiment described above, and various modifications may be made.

Reference Signs List

| | |
|---|---|
| 1 | engine |
| 1a | output shaft |
| 1b | temperature sensor |
| 1c | cylinder liner |
| 1d | cylinder cover |
| 1e | piston |
| 1ea | piston crown |
| 1eb | piston ring |
| 1ec | piston skirt |
| 1f | piston rod |
| 1g | exhaust valve seat |
| 1ga, 1ha | exhaust port |
| 1h | exhaust valve box |
| 1i | exhaust valve |
| 1ia | valve body |
| 1ib | valve rod |
| 1j | cover |
| 1ja | exhaust valve operating device |
| 1k | fuel injection valve |
| 1l | connection pipe |
| 1m | exhaust manifold |
| 2 | engine control unit |
| 3 | evaluation and diagnosis device |
| 3a | evaluation and diagnosis unit |
| 3b | input unit |
| 3c | display unit |
| 4a | hydraulic oil supplying pipe |
| 4b | oil feeding pump |
| 4c, 4f | opening and closing valve |
| 4d | fuel supplying pipe |
| 4e | fuel pump |
| 100 | system |
| R | combustion chamber |

**Claims**

1. A method of evaluating a fatigue level of a component of a marine diesel engine, the method comprising:

generating, for the component, at least two evaluation points selected from: an operation load evaluation point relating to an operation load of the marine diesel engine; an operation load variation evaluation point relating to variation of the operation load of the marine diesel engine; an operation cycle evaluation point relating to an operation cycle of the marine diesel engine; a fuel property evaluation point relating to a property of fuel of the marine diesel engine; a combustibility evaluation point relating to combustibility of the fuel; and an exhaust gas temperature evaluation point relating to temperature of exhaust gas of the marine diesel engine;
calculating a total evaluation point of the fatigue level of the component by adding at least two of the generated evaluation points; and
evaluating the fatigue level of the component based on the total evaluation point.

**2.** The method of evaluating the fatigue level of the component of the marine diesel engine according to claim 1, wherein the operation load evaluation point includes a product of an average load factor of the marine diesel engine and a fatigue level influence coefficient relating to the operation load set for each component.

**3.** The method of evaluating the fatigue level of the component of the marine diesel engine according to claim 1 or 2, wherein the operation load variation evaluation point includes:

a product of an accumulated number of starts and stops of the marine diesel engine and a fatigue level influence coefficient relating to the accumulated number of starts and stops set for each component; and

a product of an accumulated number of reciprocating operations that is an accumulated value of number of reciprocating operations between a low load region and a high load region of the marine diesel engine set for each component and a fatigue level influence coefficient relating to the accumulated number of reciprocating operations set for each component.

**4.** The method of evaluating the fatigue level of the component of the marine diesel engine according to claim 1 or 2, wherein the operation cycle evaluation point includes:

a product of an accumulated number of operation cycles of the marine diesel engine and a fatigue level influence coefficient relating to the accumulated number of operation cycles set for each component; and

a product of an accumulated number of operation cycles with load that is an accumulated number of operation cycles of the marine diesel engine at equal to or more than a load factor set for each component and a fatigue level influence coefficient relating to the accumulated number of operation cycles with load set for each component.

**5.** The method of evaluating the fatigue level of the component of the marine diesel engine according to any one of claims 1 to 3, wherein the fuel property evaluation point includes a product of concentration of an ingredient contained in the fuel and a fatigue level influence coefficient relating to the concentration of the ingredient set for each component.

**6.** The method of evaluating the fatigue level of the component of the marine diesel engine according to claim 5, wherein the ingredient is one or more selected from a group consisting of: sulfur; vanadium; sodium; aluminum and silicon; and sediment.

**7.** The method of evaluating the fatigue level of the component of the marine diesel engine according to any one of claims 1 to 5, wherein the fuel property evaluation point includes a product of a ratio of concentration of two ingredients contained in the fuel and a fatigue level influence coefficient relating to the ratio of concentration set for each component.

**8.** The method of evaluating the fatigue level of the component of the marine diesel engine according to claim 7, wherein the ratio is a ratio of concentration of sodium with respect to concentration of vanadium.

**9.** The method of evaluating the fatigue level of the component of the marine diesel engine according to any one of claims 1 to 8, wherein the combustibility evaluation point includes a product of a value of CCAI that is a calculated carbon aromaticity index of the fuel and a fatigue level influence coefficient relating to combustibility set for each component.

**10.** The method of evaluating the fatigue level of the component of the marine diesel engine according to any one of claims 1 to 9, wherein the exhaust gas temperature evaluation point includes a product of temperature of the exhaust gas being measured and a fatigue level influence coefficient relating to the temperature of the exhaust gas set for each component.

**11.** A method of diagnosing a remaining lifetime of a component of a marine diesel engine, comprising:
diagnosing a remaining lifetime of the component, based on a fatigue level of the component evaluated by the method of evaluating the fatigue level according to any one of claims 1 to 10.

**12.** A fatigue level evaluation device for a component of a marine diesel engine, the fatigue level evaluation device being configured to evaluate a fatigue level of the component of the marine diesel engine, and comprising:

a calculation unit configured to calculate, for the component, a total evaluation point of the fatigue level of the component by adding at least two evaluation points selected from: an operation load evaluation point relating to an operation load of the marine diesel engine; an operation load variation evaluation point relating to variation of the operation load of the marine diesel engine; an operation cycle evaluation point relating to an operation cycle of the marine diesel engine; a fuel property evaluation point relating to a property of fuel of the marine diesel engine; a combustibility evaluation point relating to combustibility of the fuel; and an exhaust gas temperature evaluation point relating to temperature of exhaust gas of the marine diesel engine; and

an evaluation unit configured to evaluate a fatigue level of the component based on the total evaluation point.

13. A remaining lifetime diagnosis device for a component of a marine diesel engine, the remaining lifetime diagnosis device being configured to diagnose a remaining lifetime of the component of the marine diesel engine, and comprising:

a calculation unit configured to calculate, for the component, a total evaluation point of a fatigue level of the component by adding at least two evaluation points selected from: an operation load evaluation point relating to an operation load of the marine diesel engine; an operation load variation evaluation point relating to variation of the operation load of the marine diesel engine; an operation cycle evaluation point relating to an operation cycle of the marine diesel engine; a fuel property evaluation point relating to a property of fuel of the marine diesel engine; a combustibility evaluation point relating to combustibility of the fuel; and an exhaust gas temperature evaluation point relating to temperature of exhaust gas of the marine diesel engine;

an evaluation unit configured to evaluate a fatigue level of the component based on the total evaluation point; and

a diagnosis unit configured to diagnose the remaining lifetime of the component based on the fatigue level.

14. A system comprising:

the marine diesel engine; and

the fatigue level evaluation device according to claim 12 or the remaining lifetime diagnosis device according to claim 13.

# FIG.1

# FIG.2

ENGINE CONTROL UNIT 2

ENGINE CONTROL UNIT 2

# FIG.3

# FIG.4A

# FIG.4B

# FIG.5A

# FIG.5B

# FIG.6A

# FIG.6B

# FIG.7

# FIG.8

# FIG.9

# FIG.10

TOTAL EVALUATION POINT:
60 POINTS

# FIG.11

## INTERNATIONAL SEARCH REPORT

| International application No. |
|---|
| PCT/JP2017/041294 |

| A. CLASSIFICATION OF SUBJECT MATTER |
|---|
| Int. Cl. F02D41/22(2006.01)i, F02D45/00(2006.01)i |

According to International Patent Classification (IPC) or to both national classification and IPC

| B. FIELDS SEARCHED |
|---|

Minimum documentation searched (classification system followed by classification symbols)
Int. Cl. F02D41/22, F02D45/00

Documentation searched other than minimum documentation to the extent that such documents are included in the fields searched
Published examined utility model applications of Japan    1922-1996
Published unexamined utility model applications of Japan   1971-2018
Registered utility model specifications of Japan          1996-2018
Published registered utility model applications of Japan  1994-2018

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>Y<br>A | JP 2011-220204 A (DIESEL UNITED: KK) 04 November 2011, claims 1-2, paragraphs [0012], [0013], [0019], [0026], fig. 4, 11 (Family: none) | 1, 12, 14<br>10-11, 13<br>2-9 |
| Y | JP 2001-208649 A (MITSUBISHI HEAVY INDUSTRIES, LTD.) 03 August 2001, claims 1-2, paragraphs [0022], [0034] (Family: none) | 10-11, 13 |
| A | JP 1-210840 A (JGC CORP.) 24 August 1989, page 2, upper right column, line 7 to lower left column, line 11, fig. 2, 3 (Family: none) | 1-14 |
| A | JP 2007-113473 A (HONDA MOTOR CO., LTD.) 10 May 2007, claim 1 (Family: none) | 1-14 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30.01.2018 | 06.02.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

27

**INTERNATIONAL SEARCH REPORT**

| International application No. |
| --- |
| PCT/JP2017/041294 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2002-183341 A (MITSUBISHI HEAVY INDUSTRIES, LTD.) 28 June 2002, abstract, paragraphs [0024]-[0043] (Family: none) | 1-14 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5550969 B